# EUROPÄISCHE PATENTANMELDUNG

(11) **EP 2 138 775 A2**
(43) Veröffentlichungstag der Anmeldung: **30.12.2009**
(21) Anmeldenummer: 09157072.1
(22) Anmeldetag: 01.04.2009
(51) Int. Cl.: F24D 17/00, F24D 19/10

(54) **Anordnung und Verfahren zur Bereitstellung von warmem Trinkwasser mit einem Wärmeübertrager**

(30) Priorität: 24.06.2008 DE 102008029654
(71) Anmelder: Solvis GmbH & Co. KG, 38112 Braunschweig (DE)
(72) Erfinder: Woelk, Karsten, 38527 Meine (DE); Wendker, Kai, 38106 Braunschweig (DE); Form, Jochen, 38106 Braunschcweig (DE); Jäger, Helmut, 38533 Vordorf (DE)
(74) Vertreter: Einsel, Martin

(57) **Zusammenfassung**

Eine Anordnung und ein Verfahren zur Bereitstellung von warmem Trinkwasser besitzt einen Primärkreislauf mit einem Fluid, eine warme oder fluidbereitstellende Einrichtung (11) und eine Fördereinrichtung (14) für das Fluid. Außerdem ist ein Sekundärkreislauf (20) für das zu erwärmende Trinkwasser vorgesehen. Eine Wärmetäuscher (50) dient zur Übertragung von Wärme vom Fluid des Primärkreislaufes (10) auch das Trinkwasser im Sekundärkreislauf (20). Eine Leitung (13) im Primärkreislauf (10) führt das Fluid von Wärmeübertrager (50) zur Einrichtung (11) zurück. Eine Regelungseinrichtung (30) regelt die Fördereinrichtung (14). Ein Temperaturfühler (57) ist im Primärkreislauf (10) oder Sekundärkreislauf (20) vorgesehen. Die Messwerte des Temperaturfühlers (57) werden der Regelungseinrichtung (30) zugeführt. Die Leitung (13) des Primärkreislaufes (10) weist in dem Bereich zwischen dem Wärmeübertrager (50) und der Einrichtung (11) mehrere parallele Stränge (13a, 13b, 13c) auf. In jedem der parallelen Stränge (13a, 13b, 13c) ist je mindestens eine Fördereinrichtung (14a, 14b, 14c) angeordnet. Die Ansteuerung der Fördereinrichtungen (14a, 14b, 14c) in den parallelen Strängen (13a, 13b, 13c) durch die Regelungseinrichtung (30) ist abhängig von der ermittelten Temperatur des Fluides in der Leitung (30) für jede Fördereinrichtung (14a, 14b, 14c) unterschiedlich möglich.

## Beschreibung

Die Erfindung betrifft eine Anordnung zur Bereitstellung von warmem Trinkwassermit einem Primärkreislauf mit einem Fluid, einer warmes oder heißes Fluid bereitstellenden Einrichtung, die einem Pufferspeicher mit temperaturabhängig geschichteten Bereichen des Primärfluids aufweist, und einer Fördereinrichtung für das Fluid, mit einem Sekundärkreislauf für das zu erwärmende Trinkwasser, mit einem Wärmeübertrager zur Übertragung von Wärme vom Fluid des Primärkreislaufs auf das Trinkwasserim Sekundärkreislauf, mit einer Leitung im Primärkreislauf, die Fluid vom Wärmeübertrager zur Einrichtung zurückführt, mit einer Regelungseinrichtung für die Fördereinrichtung, und mit mindestens einem Temperaturfühler im Primärkreislauf oder Sekundärkreislauf, dessen Messwerte der Regelungseinrichtung zugeführt werden.

Die Erfindung betrifft außerdem ein Verfahren zur Bereitstellung von warmem Trinkwasser in derartigen Anlagen.

Zur Bereitstellung von warmen Trinkwasser gibt es im Stand der Technik verschiedene grundsätzlich voneinander unterschiedliche Konzepte.

Konventionell wird Trinkwasser im so genannten Direktdurchlauf erwärmt. Kaltes Trinkwasser wird in dem Moment des Bedarfs einer Heizeinrichtung zugeführt, dort direkt erhitzt und dann anschließend an den Verbraucher abgegeben. Der Inhalt eines derartigen Systems an Trinkwasser ist gering, wodurch auch die hygienischen Risiken minimiert werden können. Allerdings muss die Wärmeerzeugungskapazität der Heizeinrichtung auf den nur sehr selten auftretenden Spitzenbedarf ausgelegt werden. Derartige Systeme besitzen daher im Regelfall stark überdimensionierte Heizeinrichtungen, was rasch zu unwirtschaftlichen Lösungen führt. Darüber hinaus ist eine Kombination mit umweltfreundlichen Heizeinrichtungen wie etwa Solaranlagen, Blockheizkraftwerken, Festbrennstoffkesseln und dergleichen nicht möglich, da diese die benötigte Wärmeenergie nicht rasch genug bereitstellen können. In der Praxis werden derartige Systeme beispielsweise in Gasthermen für Etagenwohnungen oder als elektrische Durchlauferhitzer eingesetzt.

Eine wirtschaftlich wesentlich sinnvollere und zugleich umweltfreundlichere Lösung findet sich bei Systemen, die mit einem Trinkwasserspeicher arbeiten. Es wird also ein zusätzlicher Speicherbehälter vorgesehen, in dem Warmwasser bevorratet werden kann. Der Trinkwasserspeicher wird so bemessen, dass er zur Abdeckung von Spitzenlasten ohne Weiteres in der Lage ist. Die Wärmeerzeugung kann hier deutlich kleiner dimensioniert werden, um das spontan mit Spitzenlast verbrauchte heiße Trinkwasser über einen längeren Zeitraum wieder zu ersetzen. Dafür ist die Nutzung alternativer Energieträger möglich und in vielen Fällen kann auch ein hoher Warmwasserkomfort bereitgestellt werden.

Solche Systeme haben allerdings den Nachteil, in hygienischer Sicht recht kritisch zu sein. Die zur Abdeckung der Spitzenlasten erforderlichen relativ großen Mengen an Trinkwasser müssen häufig über mehrere Stunden oder gar Tage bei moderaten Temperaturen um 45 °C bis 50 °C in dem Trinkwasserspeicherbehälter verharren. Der Zeitraum ist darüber hinaus nicht planbar, da er von den spontanen Verbrauchsbedürfnissen abhängt. Das führt dazu, dass diese Systeme optimale Bedingungen zur Vermehrung von Bakterien wie beispielsweise Legionellen bieten.

Da darüber hinaus die an sich vorgeschriebenen Wartungsintervalle solcher Systeme häufig vernachlässigt werden, muss im Gegenzug der Speicherinhalt zur Vermeidung der hygienischen Risiken ständig bei mindestens 60 °C gehalten werden. Derart hohe Temperaturen sind jedoch wiederum wirtschaftlich nicht mehr sinnvoll, zumal sie sich dann nicht mehr mit Solaranlagen, Brennwertkesseln und dergleichen kombinieren lassen. Die Trinkwasserspeicher müssen darüber hinaus korrosionsbeständig ausgeführt werden, etwa aus emailliertem Stahl oder aus Edelstahl, was zu weiter verteuerten Systemen führt und darüber hinaus auch einen erheblichen Platzbedarf erfordert.

Um die Probleme sowohl der im Direktdurchlauf erwärmenden Systeme als auch derjenigen mit einem Trinkwasserspeicher zu lösen, wird vielfach mit einem System gearbeitet, bei dem ein Primärfluid in einem beispielsweise heizungsseitigen Pufferspeicher vorgesehen wird, wobei dieser Pufferspeicher etwa als aus der EP 0 384 423 B1 bekannter geschichteter Speicher aufgebaut sein kann. Die Wärmeerzeugung in diesem Primärfluid kann in beliebiger Form mittels Solarheizungen, Erdwärme, Blockheizkraftwerken, Festbrennstoffkesseln etc. erfolgen. Hygienisch sind diese Primärfluidkreise nicht kritisch, da das Primärfluid nicht als Trinkwasser eingesetzt wird und außerdem beliebige Zusätze enthalten kann.

An den Pufferspeicher ist als Verbraucher eine Warmwasserstation anschließbar, die einen Wärmeübertrager besitzt, beispielsweise einen Plattenwärmeübertrager. Das Primärfluid durchströmt bei Bedarf diesen Wärmeübertrager und gibt in ihm die benötigte Wärme an das zu erwärmende Trinkwasser ab.

Derartige Systeme sind sehr hygienisch, weisen einen vergleichsweise geringeren Platzbedarf auf, da der Pufferspeicher für die Heizungsanlage ohnehin benötigt wird, und sind in der Regel relativ preisgünstig herzustellen.

Allerdings sind sie in regelungstechnischer Hinsicht recht anspruchsvoll. Aus der DE 196 19 566 C1 oder auch der EP 1 170 554 A2 sind Anordnungen bekannt, mit denen entsprechend dem Durchlaufprinzip Warmwasser zubereitet wird. Ein Ziel derartiger Anlagen ist das rasche Bereitstellen von Warmwasser bei Anforderung.

Problematisch ist dabei auch, dass bei einer Kombination mit Zirkulationsnetzen im Trinkwasserbereich diese Zirkulationsnetze eine ständig zu deckende Last verursachen, die gegenüber der Auslegungsleistung oder Spitzenlast relativ gering ist, jedoch aufgrund der hohen Laufzeiten von mehr als 16 Stunden pro Tag durchaus erhebliche Energiemengen verbraucht.

Dabei ist ein weiteres Problem dadurch gegeben, dass diese Zirkulationsnetze dazu führen, dass die Rücklauftemperatur des Primärfluids mehr als 55 °C betragen kann.

Wünschenswert wäre es, eine Anordnung und ein Verfahren zur Bereitstellung von warmem Trinkwasser mit einem Wärmeübertrager zu haben, die noch weitere Möglichkeiten schaffen, energetisch sinnvolle Maßnahmen zu treffen.

Es ist daher eine Aufgabe der vorliegenden Erfindung, eine derartige Anordnung und ein derartiges Verfahren vorzuschlagen.

Diese Aufgabe wird bei einer gattungsgemäßen Anordnung erfindungsgemäß dadurch gelöst, dass die Leitung des Primärkreislaufs in dem Bereich zwischen dem Wärmeübertrager und der Einrichtung mehrere parallele Stränge aufweist, dass in jedem der parallelen Stränge je mindestens eine Fördereinrichtung angeordnet ist, dass die mehreren parallelen Stränge der Leitung das Fluid jeweils in Bereiche des Pufferspeichers der Einrichtung einschichten, die eine unterschiedliche Temperatur aufweisen, und dass die Ansteuerung der Fördereinrichtungen in den parallelen Strängen durch die Regelungseinrichtung abhängig von der ermittelten Temperatur des Fluids in der Leitung für jede Fördereinrichtung unterschiedlich möglich ist.

Diese Aufgabe wird bei einem gattungsgemäßen Verfahren erfindungsgemäß dadurch gelöst, dass das Fluid des Primärkreislaufs in dem Bereich zwischen dem Wärmeübertrager und der Einrichtung in mehreren parallelen Strängen geführt wird, dass jeder dieser parallelen Stränge eine separate Förderung des Fluides vornimmt, dass die Fluide aus den parallelen Strängen in Bereiche des Pufferspeichers der Einrichtung mit unterschiedlicher Temperatur eingeschichtet werden, und dass die Ansteuerung der Fördereinrichtungen in den parallelen Strängen durch die Regelungseinrichtung abhängig von der ermittelten Temperatur des Fluids in der Leitung für jede Fördereinrichtung unterschiedlich angesteuert werden.

Mit einer derartigen Konzeption wird es möglich, die in bestimmten Fällen auftretenden relativ hohen Rücklauftemperaturen im Primärfluid sinnvoll zu berücksichtigen, ohne dass ein hoher apparativer Aufwand erfolgen muss.

Hier erfolgt nun nämlich eine Aufteilung des Rücklaufes des Primärfluids aus dem Wärmeübertragerauf zumindest zwei verschiedene Strömungswege. Jeder dieser beiden Strömungswege enthält eine Fördereinrichtung, insbesondere eine Umwälzpumpe, die insbesondere drehzahlgeregelt ist. Diese beiden (oder mehr) Umwälzpumpen laufen unabhängig voneinander. In jedem der beiden Teilstränge sitzt nun bevorzugt eine Pumpe.

Diese Pumpen können mit einer nachgeschalteten Rückschlagarmatur versehen sein, um eine Fehlzirkulation zu verhindern.

Diese Pumpen können von unterschiedlichem Typ sein. Beide Stränge der Leitung führen jedoch von dem Wärmeübertrager wieder zurück zu der Einrichtung, aus der dann im Folgenden wiederum ein warmes oder heißes Primärfluid entnommen werden kann.

Der Begriff "parallele Stränge" ist selbstverständlich nicht im strengen geometrischen Sinne zu verstehen, sondern strömungstechnisch so, dass diese beiden Stränge Teile der Leitung vom Wärmeübertrager zur Einrichtung bilden und Alternativen für den Weg bilden, den ein Molekül des Primärfluids nehmen kann.

Besonders bevorzugt ist es, wenn die das warme oder heiße fluidbereitstellende Einrichtung einen Pufferspeicher mit temperaturabhängig geschichteten Bereichen des Primärfluids aufweist und wenn die mehreren parallelen Stränge der Leitung das Fluid jeweils in Bereiche des Pufferspeichers der Einrichtung einschichten, die eine unterschiedliche Temperatur aufweisen.

In dem Fall, dass in dem Wärmeübertrager gerade eine Erwärmung des Sekundärfluids, also des Trinkwassers für eine Zapfung erfolgt, wird in dem Wärmeübertrager dem Primärfluid ein sehr großer Teil seiner Wärmeenergie entnommen. Das Primärfluid verlässt demzufolge den Wärmeübertrager in relativ kaltem Zustand. Es wird dann durch einen der beiden Teilstränge, nämlich durch den für kaltes Primärfluid vorgesehenen Teilstrang wieder in den Speicher geführt und dort direkt in den unteren Bereich eingeschichtet. In dem Pufferspeicher befindet sich das Primärfluid normalerweise in einer geschichteten Form, wobei die kälteren Bereiche des Primärfluids unten und die wärmeren Bereiche des Primärfluids sich oben im Pufferspeicher befinden, entsprechend den Dichteverteilungen des Primärfluids. Eine Zuführung des kalten Primärfluids in den unteren Bereich stört also diese Schichtung nicht.

Im Pufferspeicher bildet sich daher abhängig von der Momentanzapfung ein mehr oder weniger großes kaltes Reservoir in dem Temperaturbereich von etwa 15 °C bis 25 °C aus.

Die Umwälzpumpe in diesem kalten Teilstrang wird entsprechend der Spitzenleistung im Zapfbetrieb dimensioniert, die in der Regel deutlich größer als die Zirkulationsleistung ist. Diese Spitzenleistung wird allerdings deutlich weniger häufig als die Zirkulationsleistung abgerufen.

Außerhalb der Zeiten, in denen Trinkwasser zur Entnahme erwärmt wird, wird im Wärmeübertrager Sekundärfluid (also Trinkwasser) lediglich im Rahmen der Zirkulationslast erwärmt. Der Wärmebedarf ist hier deutlich geringer, so dass das Primärfluid den Wärmeübertrager mit einer wesentlich höheren Temperatur verlässt, dafür allerdings in wesentlich geringerem Volumenstrom.

Der in diesem Fall auftretende Primärfluidstrom wird nun durch den zweiten Teilstrang geführt. Die Pumpe dieses Teilstranges kann in der Regel deutlich kleiner als die erstgenannte Pumpe ausgelegt werden. Die Auslegung entspricht einer üblichen Zirkulationslast. Aufgrund der zu erwartenden langen Pumpenlaufzeiten sollten hier vor allem drehzahlregelbare Hocheffizienzpumpen mit EC-Motoren zum Einsatz kommen.

Dieser zweite Teilstrang wird in den Speicherbereich etwa gleicher Temperatur geführt. Das deutlich wärmere Primärfluid passt von seiner Temperatur her genau in diesen Bereich der geschichteten Primärfluidmengen. Diese temperaturabhängige Schichtung kann etwa durch aus der EP 0 384 423 B! bekannte Schichten oder Elemente erzeugt sein.

Bei sehr großen Systemen ist es auch denkbar, eine Aufteilung auf drei oder mehr Rücklaufstränge für das Primärfluid mit je einer Pumpe vorzusehen. Es kann dann entsprechend der jeweiligen Rücklauftemperatur eine Einschichtung in entsprechend drei oder mehr definierte Speicherzonen vorgenommen werden.

Besonders bevorzugt ist es, wenn für den Sekundärkreislauf ein Zirkulationskreislauf vorgesehen ist, der eine Fördereinrichtung aufweist, wenn die Fördereinrichtung zur Förderung eines variablen Volumenstroms ausgerüstet ist, und wenn der Zirkulationskreislauf so ausgelegt ist, dass er ständig bereits erwärmtes Trinkwasser an einem Warmwasserausgang des Sekundärkreislaufs bereitstellt.

Dabei ist es weiter bevorzugt, wenn die Fördereinrichtung mit der Regeleinrichtung verbunden ist und wenn die Regeleinrichtung eine Förderung des Volumenstroms im Zirkulationskreislauf aktiv zur Erzielung einer hohen Regelgüte an Warmwasserausgang und/oder zur Vermeidung einer Stagnation im Sekundärkreislauf zur Verkaltungsprävention beeinflusst.

Durch das variable Einstellen der Volumenströme wird es möglich, Auslauftemperaturen an einem Warmwasserauslauf gezielt zu erreichen.

Gerade das Zusammenwirken der aktiven Einbindung einer Zirkulationslast ermöglicht es, die im Primärkreislauf zur Verfügung stehenden, bei bestimmten Lastsituationen hohen Temperaturen durch die Verzweigung in mehrere Förderstränge optimal auszunutzen.

Die konkrete Rücklauftemperatur sowie auch die Volumenströme des Trinkwassers und des Zirkulationswassers können über entsprechende Sensoren erfasst werden. Dies ermöglicht es, die beiden (oder mehr) Fördereinrichtungen in den verschiedenen Strängen bedarfsgerecht anzusteuern.

Auch auf der Seite des Primärkreislaufs können Sensoren vorgesehen werden, die die Temperatur und/oder den Volumenstrom erfassen.

Durch diese Maßnahmen reduziert sich die notwendige elektrische Hilfsenergie sehr deutlich, zumal die Dimensionierung der Fördereinrichtungen optimiert werden kann.

Eine effiziente Ansteuerung der zwei oder mehr Fördereinrichtungen in den verschiedenen Teilsträngen wird möglich, so dass durch eine auf eine sehr geringe Leistung, dafür auf Dauerbetrieb ausgelegte Pumpe ein regelmäßiger, kleiner Volumenstrom aus nur wenig abgekühltem Primärfluid gefördert werden kann, während eine für wesentlich niedrigere Gesamtlaufzeiten ausgelegte, dafür aber für größere Volumenströme geeignete Pumpe in dem anderen Teilstrang tätig wird, um kurzzeitig größere Mengen von stark abgekühltem Primärfluid zu fördern. Die Auswahl und Ansteuerung der Fördereinrichtungen, insbesondere von Pumpen, erfolgt völlig automatisch dadurch, dass ein oder mehrere Temperaturfühler erkennen, welcher dieser beiden alternativen Fälle gerade vorliegt.

Dazu kann ein Temperaturfühler in der Rücklaufleitung von dem Wärmeübertrager zur Einrichtung eingesetzt werden, der unmittelbar misst, ob jetzt gerade stark oder weniger stark abgekühltes Primärfluid in der Leitung strömt. Erkennt dieser Temperaturfühler oder konkret ausgedrückt die mit ihm verbundene Regeleinrichtung eine Temperaturänderung, so schaltet sie jeweils auf die andere Pumpe um.

Zusätzlich zu Temperaturfühlern können auch Volumenstrommesseinrichtungen eingesetzt werden. Es ist zwar möglich, eine Regelung auch ohne Volumenstrommesseinrichtungen zu schaffen, diese verbessert jedoch die Möglichkeiten, etwa einen Energiebedarf aufzuzeigen.

In einer Ausführungsform wird auf einen separaten Temperaturfühler in der Rücklaufleitung verzichtet, und es werden stattdessen Messwerte verwendet, die ein Temperaturfühler im Sekundärkreislauf erkennt. Dieser stellt fest, ob jetzt gerade heißes Wasser gezapft wird oder nicht. Eine solche Ausführungsform wird aber nur in Sonderfällen eingesetzt.

In allen Fällen gilt, dass eine Regeleinrichtung erkennt, ob und welche Temperatur und welche Volumenströme sich in der Rücklaufleitung des Primärfluids konsequent aus dieser Erkenntnis ermitteln lassen, so dass sie ebenfalls entscheiden kann, welche der beiden Pumpen in den Teilsträngen gerade laufen sollen.

Die Erfindung stützt sich jedoch insbesondere auf eine Kombination aus einem Pufferspeicher einerseits und einer bestimmten Form des Direktdurchlaufs andererseits. Die Erwärmung des Trinkwassers ebenso wie des Zirkulationsvolumenstroms auf die gewünschte Warmwassertemperatur erfolgt jeweils über einen Wärmetauscher, etwa einen Plattenwärmeübertrager, im Durchlaufverfahren.

Ein gesonderter Trinkwasserspeicher ist erfindungsgemäß nicht erforderlich. Dadurch lassen sich als Vorteile unter anderem eine bestmögliche Hygiene, eine Effizienzsteigerung bei einer Nachheizung und bei einer solaren Beladung, eine Kostenersparnis und schließlich auch eine Platzersparnis erzielen.

Die verschiedenen Bauteile können sehr praktisch in standardisierter Form vorgehalten werden, etwa in vorgefertigten Stationen in Verbindung mit einer entsprechenden Systemregelung. Mit einem identischen Systemaufbau können verschiedene Stationen aus unterschiedlichen gewünschten Leistungsklassen bis hin in den Megawattbereich hinein bereitgestellt werden.

Der Pufferspeicher mit seinen temperaturabhängigen Schichten kann seine Vorteile vollständig nutzen und als Energiespeicher mit schwankenden Lasten für Trinkwasser und Heizung und ebenso mit schwankenden Gewinnen wie etwa aus einer Solaranlage arbeiten.

Durch eine geschickte Regelungsstrategie und die erfindungsgemäße Anordnung verschiedener Bauteile in einer vorgefertigten Station wird eine hygienisch einwandfreie Trinkwassererwärmung in Trinkwassernetzen auch mit Warmwasserzirkulationsleitungen möglich. Das Prinzip ist universell bis hin zu sehr großen und größten Anlagen einsetzbar, da es praktisch keine obere Systemleistungsgrenze kennt.

Besonders zweckmäßig lässt sich das System mit einem Pufferspeicher einsetzen, bei dem das Primärfluid zugleich Heizungswasser ist, also bei einem mit Heizungswasser gefüllten Pufferspeicher beziehungsweise Puffer-Schichtenspeicher.

Das wertvolle und stets gut zu überwachende Lebensmittel Trinkwasser wird genau im Moment seiner Nutzung erwärmt, was zu hervorragenden hygienischen Eigenschaften führt. Der Inhalt des Trinkwassererwärmers ist dabei auf ein Minium reduziert.

Die primärseitigen Rücklaufvolumenströme werden sauber temperaturorientiert getrennt, was sich sehr schnell durch eine entsprechende Sensorik realisieren lässt. Dies führt zu einer schnellen und lang anhaltenden Auskühlung des unteren Pufferbereichs bei der Zapfung von Trinkwasser. Dies ist effektiv und dieses kalte Volumen lässt sich für einen zeitversetzten Nachheizvorgang auch zu einer aktiven Regelung der Rücklauftemperatur nutzen. Gewünschte Zieltemperaturen lassen sich sehr präzise ansteuern und das kalte Volumen steht gleichzeitig zur Steigerung des Systemwirkungsgrades bei einer solaren Erwärmung zur Verfügung.

Von besonderem Vorteil ist es, wenn eine Fühleranordnung im Wärmeübertrager eingesetzt wird, wie dies aus der DE 10 2004 038 546 A1 bekannt ist.

Mit einer solchen Konzeption lässt sich die Temperatur direkt innerhalb des Wärmeübertragers erfassen. Diese direktere Information hilft dabei, schwankende Warmwassertemperaturen, insbesondere bei Lastwechseln zu vermeiden und eine präzise Steuerung und Regelung zu erzielen. Auf diese Weise kann auch gemessen werden, ob bei Zapfstopps im Wärmeübertrager eine für eine Verkalkung kritische Temperatur durch die Übertragung von Restwärme auf der Primärfluidseite erreicht werden kann.

Es lässt sich also ein sehr guter Trinkwarmwasserkomfort mit konstanten Auslauftemperaturen bei unterschiedlichen Betriebszuständen erreichen.

In einer bevorzugten Ausführungsform wird eine Zirkulationspumpe eingesetzt, die zugleich Bestandteil der Station ist. Sie kann bevorzugt direkt von der Regelung drehzahlgesteuert werden. Durch diese aktive Betriebsweise der Zirkulationspumpe auf der Sekundär- beziehungsweise Trinkwasserseite wird eine gleichmäßige Warmwassertemperatur erreicht. Der Wärmeübertrager, insbesondere ein Plattenwärmeübertrager, wird stetig durchströmt. Mit einer entsprechenden Pumpenregelung lassen sich Temperaturen auf der Trinkwasserseite von mehr als 60° vermeiden. Damit ist auch eine aktive Verkalkungsprävention gegeben.

Die Erfindung lässt sich allerdings auch in Trinkwassersystemen ohne ein Zirkulationsnetz einsetzen. Dort kann ein Abgang in der Warmwasserleitung mit Rückführung über den Zirkulationsanschluss der Station vorgesehen werden.

In der besonders bevorzugten Ausführungsform wird auch eine lastabhängige Durchströmung des Wärmeübertragers, insbesondere also eines Plattenwärmeübertragers, ermöglicht. Dadurch kann eine angepasste Nutzung der zur Verfügung stehenden Platten und damit ein optimaler Wärmeübergang mit einer Minimierung der Rücklauftemperatur erfolgen.

Dabei ist zu berücksichtigen, dass Plattenwärmeübertrager häufig in einem sehr großen Leistungsbereich betrieben werden. Sie müssen dann auf den Spitzenlastfall ausgelegt werden. Für einen Schwachlastfall ist ein solcher Plattenwärmeübertrager allerdings dann überdimensioniert. Der aus einer Vielzahl parallel geschalteter Platten bestehende Plattenwärmeübertrager wird dann jeweils mit einer relativ geringen Strömungsgeschwindigkeit durch die Fluide durchströmt. Dadurch verschlechtert sich der Wärmeübergang und somit auch die Effektivität der Wärmeübertragung. Die Rücklauftemperatur steigt an.

Betrachtet man dies relativ zu einem Wärmeübertrager, der für einen schwacheren Fall optimiert wäre, erhöht sich die Rücklauftemperatur mit höheren Primärvolumenströmen. Dadurch wird auch die Effizienz des Gesamtsystems herabgesetzt.

Hierzu wird in der bevorzugten Ausführungsform die Beschaltung der Platten in Inneren des Plattenwärmeübertragers lastabhängig vorgenommen.

Dies erfolgt in einer besonders bevorzugten Ausführungsform mit Klappen, die so in einem Plattenwärmeübertrager eingebracht werden, dass sowohl auf der primären wie auch auf der sekundären Seite bei einer geschlossenen Klappe nur ein bestimmter Anteil aller Platten, beispielsweise 1/3 aller Platten, angeströmt werden. Der Plattenwärmeübertrager entspricht dann in seiner Leistungscharakteristik einem eigentlich sehr viel kleineren, für den Schwachlastfall optimierten Plattenwärmeübertrager mit einem guten Auskühlverhalten.

Nimmt dagegen die Last zu und nähert sich dem Spitzenlastfall, so kann die Klappe - bevorzugt eine federbelastete Klappe - bei einem definierten Differenzdruck öffnen und die weiteren Platten insgesamt oder teilweise freigeben.

Durch die aufgrund der beschriebenen Klappenfunktion im Schwachlastfall hydraulisch benachteiligte Plattenreserve wird dabei aber jeweils ein definierter Leckstrom geführt. Dieser Leckstrom gewährleistet einen relativ homogenen Temperaturverlauf im Plattenwärmeübertrager.

Im Folgenden wird anhand der Zeichnung ein Ausführungsbeispiel der Erfindung näher erläutert. Es zeigen:
- **Figur 1**: eine schematische Darstellung einer erfindungsgemäßen Anordnung;
- **Figur 2**: eine schematische Darstellung einer Ausführungsform eines Wärmeübertragers für eine Version der erfindungsgemäßen Anordnung; und
- **Figur 3**: einen Ausschnitt aus Figur 2.

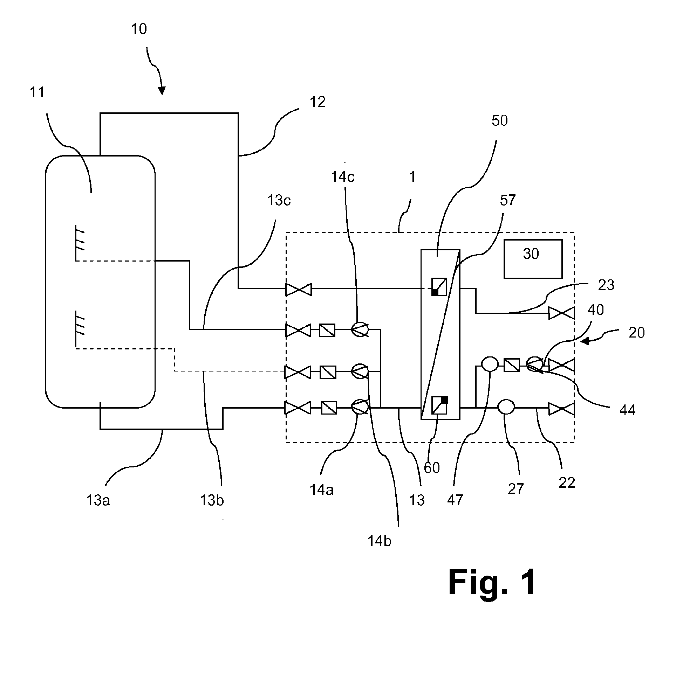

Die rein schematische, nur die wesentlichsten Teile der gesamten Anordnung wiedergebende Darstellung in **Figur 1** zeigt in der linken Hälfte einen Primärkreislauf 10, in der rechten Hälfte einen Sekundärkreislauf 20. Ein bestimmter Bereich der dargestellten Anordnung ist mit gestrichelten Linien als Wärmestation 1 zusammengefasst. Diese kann zur Vereinfachung der Montage vorgefertigt werden.

Der Primärkreislauf 10 beginnt links mit einer Einrichtung, die warmes oder heißes Fluid bereitstellt, hier ein Pufferspeicher 11. Von diesem Pufferspeicher 11 führt eine Leitung 12 zu einem Wärmeübertrager 50. Nach dem Durchlaufen des Wärmeübertragers 50 und der Abgabe der Wärmeenergie in dem selben läuft das Fluid in den Primärkreislauf 10 zurück über eine ausgangsseitige Leitung 13 zur Einrichtung 11, also dem Pufferspeicher.

In der ausgangsseitigen Leitung 13 ist eine Fördereinrichtung 14, insbesondere eine Pumpe vorgesehen.

Im Primärkreislauf 10 gelangt das Fluid aus dem oberen Bereich des Pufferspeichers 11 zum Wärmeübertrager 50, von dort durch die Leitung 13 dann wieder in den unteren Bereich des Pufferspeichers 11, wo sie eingeschichtet oder sonst geeignet zurückgegeben wird.

Der Sekundärkreislauf 20 auf der rechten Seite der Darstellung der **Figur 1** beginnt mit einer Kaltwasserzuleitung 22, mit der kaltes Trinkwasser(Trinkwasser, Waschwasser, etc.) dem Wärmeübertrager 50 zugeführt wird. In dem Wärmeübertrager 50 wird die Wärmeenergie des im Gegenstrom laufenden Primärkreislaufs 10 aufgenommen. Nach Durchlaufen des Wärmeübertragers 50 verlässt das Trinkwasserdiesen wiederum und strömt durch eine ausgangsseitige Leitung 23 zum Warmwasserentnahmepunkt, der Zapfstelle. Die Förderung im Sekundärkreislauf kann grundsätzlich dadurch erfolgen, dass die Kaltwasserzufuhr unter Druck erfolgt und der Warmwasserentnahmepunkt durch einen Hahn diesen Druck ggf. sperrt.

Zusätzlich ist im Sekundärkreislauf 20 noch eine Zirkulationsleitung 40 vorgesehen. Die Zirkulationsleitung 40 zweigt benachbart zur Zapfstelle (nicht dargestellt, rechts außerhalb der Wärmestation 1) ab und führt zurück zur Kaltwasserzugangsleitung 22 unmittelbar vor dem Wärmeübertrager 50. In der Zirkulationsleitung 40 ist eine Zirkulationsfördereinrichtung 44 in Form einer Zirkulationspumpe vorgesehen. Angedeutet ist ferner ein Temperaturfühler 47, der die Temperatur in der Zirkulationsleitung 40 misst.

Zusätzlich zum Temperaturfühler 47 können auch weitere Sensorelemente vorgesehen werden (nicht dargestellt), so beispielsweise eine Volumenstrommesseinrichtung, um die Zirkulationslast besser erfassen zu können.

Wird nun an der Zapfstelle, also dem Warmwasserentnahmepunkt, der Hahn aufgedreht, so gibt entweder dieser Vorgang, die Volumensstromeinrichtung oder bevorzugt das Ausgangssignal eines Temperaturfühlers 57 im Wärmeübertrager 50 ein Signal für die Zirkulationspumpe 44, das sich in der Leitung 23 befindende Trinkwasser aus dem Bereich vor der Zapfstelle abzuziehen und durch die Zirkulationsleitung 40 wieder vor den Wärmeübertrager 50 zu fördern.

Mittels der Sensoren, also mittels des Temperaturfühlers 47, der Volumenstrommesseinrichtung und gegebenenfalls weiterer Messelemente, wird es einer noch im Folgenden erörterten Regelungseinrichtung 30 ermöglicht, die Zapftemperatur konstant einzuregeln und gegebenenfalls auch die geförderte Wärmemenge zu erfassen.

Sinn des Zirkulationskreislaufs 40 ist es, das nach gewisser Standzeit abgekühlte Wasser in der Leitung 23 nicht aus der Zapfstelle strömen zu lassen, da der Verbraucher dort warmes Wasser wünscht und nicht abgekühltes Trinkwasser. Er würde dieses von ihm nicht gewünschte abgekühlte Trinkwasser nicht nutzen und möglicherweise einfach nur aus der Leitung laufen lassen. Das nun aktuell aus dem Wärmeübertrager 50 strömende Wasser dagegen ist warm, denn es hat Wärmeenergie aus dem Primärkreislauf 10 aufgenommen. Die Länge der Leitung 23 und das Strömungsverhalten sind bekannt, so dass sehr präzise die Zirkulationspumpe 44 so gesteuert werden kann, dass genau beim Erreichen wunschgemäß erwärmten Trinkwassers an der Zapfstelle dieses dort auch ausströmen kann.

Für eine Steuerung (oder genauer betrachtet Regelung oder Ansteuerung) der Fördereinrichtungen 14a, 14b, 14c können also Temperaturmesswerte von den Temperaturfühlern 47 oder 57 oder 27 herangezogen werden, ebenso auch Messwerte von Volumenstrommessungen oder andere Messwerte, die es erlauben, Rückschlüsse auf die aktuell gerade vorliegende Bedarfssituation beziehungsweise das aktuelle Lastverhalten zu ziehen.

Eine Regelungseinrichtung 30 ist lediglich schematisch angedeutet. Diese Regelungseinrichtung 30 ist nun mit zur Verdeutlichung nicht dargestellten Datenübertragungsleitungen mit den Fördereinrichtungen 14a, 14b, 14c und den Temperaturfühler 27, 47, 57 verbunden, um einerseits Messwerte zu empfangen und andererseits entsprechende Steuer- oder Regelungssignale zu übermitteln. Hier kann auch eine Energieversorgung für die Fördereinrichtungen 14a, 14b, 14c vorgesehen sein.

Betrachtet man nun wiederum den Primärkreislauf 10 und dort die Leitung 13, durch die das Primärfluid nach dem Durchströmen des Wärmeübertragers 50 diesen wieder verlässt, so zweigt sich die Leitung 13 in der Darstellung in drei Zweigleitungen 13a, 13b, 13c auf.

In jeder dieser drei Zweigleitungen 13a, 13b, 13c befindet sich je eine Fördereinrichtung 14a, 14b, 14c. Diese drei Fördereinrichtungen sind bevorzugt Pumpen und sind unabhängig voneinander und können von unterschiedlichem Typ und insbesondere von variabel veränderbarer Förderleistung sein.

Die drei Zweigleitungen 13a, 13b, 13c führen in unterschiedliche Bereiche des Pufferspeichers 11 zurück. Dieser Pufferspeicher 11 ist als geschichteter Speicher aufgebaut, so dass sich wie bereits oben erwähnt die wärmeren Bereiche des Primärfluids weiter oben und die kälteren weiter unten befinden.

Abhängig von der Temperatur des Primärfluids nach dem Verlassen des Wärmeübertragers 50 in der noch gemeinsamen Leitung 13 wird jeweils eine der Fördereinrichtungen 14 eingeschaltet und die beiden anderen Zweigleitungen dementsprechend gesperrt. Durch diese fließt dann also kein Fluid beziehungsweise das Fluid in ihnen steht.

Wird also festgestellt, dass aus dem Wärmeübertrager50 nur relativ kaltes Primärfluid in die Leitung 13 abgegeben wird, so wird nur die unterste Fördereinrichtung 14a eingeschaltet und fördert dieses strömende Primärfluid in den untersten Bereich des Pufferspeichers 11.

Relativ warmes Primärfluid in der Leitung 13 wird durch Einschalten der obersten Fördereinrichtung 14c auch in einen weiter oben liegenden Bereich des Pufferspeichers 11 gefördert.

Primärfluid mittlerer Temperatur wird dann durch die Leitung 13b durch die Fördereinrichtung 14b in einen mittleren Bereich des Pufferspeichers 11 gefördert.

Die Temperatur des Primärfluids nach dem Verlassen des Wärmeübertragers 50 hängt davon ab, ob das Primärfluid im Wärmeübertrager 50 viel oder wenig Wärmeenergie an das Sekundärfluid im Sekundärkreislauf 20 abgegeben hat. Viel Wärmeenergie wird abgegeben, wenn an der Zapfstelle am Ende der Leitung 23 viel heißes Wasser abgezapft wird. Verhältnismäßig wenig Wärmeenergie wird im Wärmeübertrager 50 übertragen, wenn lediglich Sekundärfluid (also Trinkwasser) in der Zirkulationsleitung 40 auf einer vorgegebenen Temperatur gehalten wird, also mit einer relativ hohen Temperatur schon in den Wärmeübertrager 50 eintritt.

Eine entsprechende Ansteuerung der Fördereinrichtungen 14a, 14b und 14c kann also auf der Grundlage einer Vielzahl unterschiedlicher Messwerte und Erkenntnisse erfolgen. Diese Steuerung kann auch anhand des Lastverhaltens auf dem Sekundärkreislauf 20 erkennen, ob und welche Menge der Volumenstrom im Primärkreislauf 10 aufnehmen sollte. Dabei gibt es zwischen diesen Temperatur- und Volumenerkenntnissen Zusammenhänge.

So muss bei einem hohen Bedarf an Warmwasser entsprechend einem hohen Wärmebedarf auch relativ viel Primärfluid im Primärkreislauf 10 durch den Wärmeübertrager 50 gefördert werden. Dieses Ereignis tritt nur wenige Male am Tag auf, zeitlich betrachtet also nur selten. Das bedeutet, dass die Fördereinrichtung 14a zwar nur relativ selten läuft, dafür hier jedoch eine Drehzahl geregelte Pumpe eingesetzt werden sollte, die auch einen größeren Volumenstrom fördern kann.

Bei einem geringen Wärmebedarf, wie er beispielsweise bei einer reinen Erwärmung des Trinkwassers in der Zirkulationsleitung 40 vorliegt, ist auch die Menge an zu förderndem Primärfluid im Primärkreislauf 10 relativ gering, dafür aber andauernd, sodass die Fördereinrichtung 14c in der Zweigleitung 13c eine Fördereinrichtung mit relativ geringem Volumenstrom sein kann, die aber für einen Dauerbetrieb ausgelegt sein sollte.

Nicht dargestellt, aber selbstverständlich möglich ist es, jede der erwähnten drei Einschichtungen im Pufferspeicher 11 ihrerseits mit Einschichtungselementen zusätzlich fein abzustimmen, wie sie beispielsweise auch schon aus der EP 0 384 423 B1 und weiteren Schichtenladesystemen bekannt sind.

Diese Systeme werden jedoch dadurch entlastet, dass hier schon eine direkte Zuordnung der ungefähr zu treffenden Schicht beim Einströmen berücksichtigt wird.

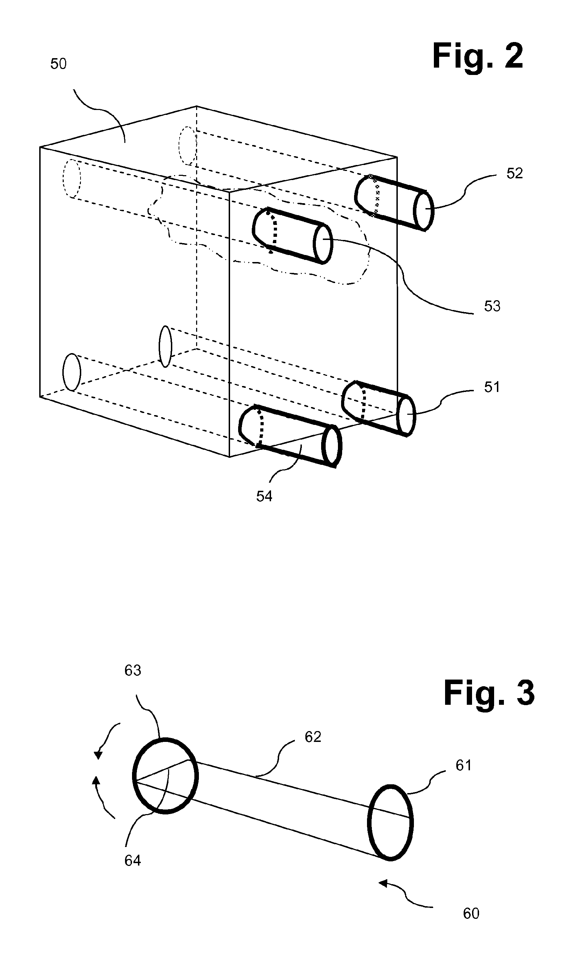

Die Details einer bevorzugten Ausführungsform des Wärmeübertragers 50 aus der Figur 1 sind in den Figuren 2 und 3 dargestellt.

In der **Figur 2** ist der Wärmeübertrager 50 in Form eines Plattenwärmeübertragers schematisch vergrößert herausgezeichnet. Er ist in seiner Einbausituation dargestellt.

Der Wärmeübertrager 50 besitzt also einen Eintritt 51 für das Primärfluid im Primärkreislauf 10 und einen Austritt 52 für das Primärfluid im Primärkreislauf 10 nach dem Durchlaufen des Wärmeübertragers. Am Eintritt 51 tritt also heißes Primärfluid ein, während am Austritt 52 abgekühltes oder kälteres Primärfluid austritt und dann in der Leitung 13 weiterströmt (vergleiche Figur 1).

Ferner tritt Sekundärfluid im Sekundärkreislauf 20 über die Leitung 22 in den Eintritt 53 des Wärmeübertragers 50 ein. Die Temperatur des Sekundärfluids ist dabei kalt beziehungsweise abgekühlt, soweit es sich um Sekundärfluid aus dem Zirkulationskreislauf 40 handelt.

Das innerhalb des Wärmeübertragers 50 dann wieder erwärmte Sekundärfluid im Sekundärkreislauf 20 tritt am Austritt 54 wieder aus dem Wärmeübertrager aus.

Innerhalb des Wärmeübertragers 50 läuft in der dargestellten Einbausituation also das Primärfluid von unten nach oben, das Sekundärfluid dagegen von oben nach unten. Zwischen dem Primärfluid und dem Sekundärfluid gibt es entsprechende Kontaktflächen (nicht dargestellt) zum Übertragen der Wärmeenergie.

Das Primärfluid strömt innerhalb des Wärmeübertragers 50 zwischen einer Vielzahl von Platten oder Lamellen, die zwischen sich Kanäle bilden. Die Einströmung erfolgt über die gesamte in der Figur 2 dargestellte Länge des Primäreintritts von der rechten bis zu linken Kante des Wärmetauschers.

In ähnlicher Form strömt das Sekundärfluid von oben nach unten durch andere, vergleichbare Kanäle zwischen entsprechenden Platten und Lamellen hindurch.

In einer bevorzugten Ausführungsform der Erfindung ist nun vorgesehen, dass der Bereich, in dem das Primärfluid von unten nach oben und das Sekundärfluid von oben nach unten strömen, innerhalb des Wärmeübertragers 50 dadurch beschränkt wird, dass die Einströmtiefe in horizontaler Richtung des Primärfluids am Eintritt 51 und des Sekundärfluids am Eintritt 53 jeweils beschränkt ist.

Um eine solche Beschränkung vornehmen zu können, ist ein in der **Figur 3** dargestelltes Element 60 vorgesehen. Das Element 60 besitzt einen Ring 61, der auf der rechten Seite in der Figur 3 dargestellt ist und zur Aufnahme am Stutzen der Eintrittsöffnungen 51 beziehungsweise 53 des Wärmeübertragers 50 vorgesehen ist.

Von diesem Ring 61 führen zwei oder mehr Führungsstreben 62 in diese Eintrittsöffnungen des Wärmeübertragers 50 hinein, wobei die Länge der Führungsstreben 62 dem angestrebten Leistungsverhältnis angepasst ist, das im Wärmeübertrager 50 gewünscht wird. Die Länge der Führungsstreben 62 kann etwa ein Drittel der Gesamtlänge des Wärmeübertragers 50 betragen.

Die Führungsstreben 62 enden an einer Rückschlagklappe 63, die als Schmetterlings-Rückschlagklappe ausgebildet ist und um eine Drehachse 64 mit einer Rückstellfeder drehbar angeordnet ist.

Diese Schmetterlings-Rückschlagklappe 63 kann also bei entsprechender Stellung innerhalb des Eintrittes 51 oder 53 dazu dienen, das weitere Strömen des Primärfluids oder des Sekundärfluids in Richtung des Eintrittes stark zu reduzieren. Dann strömt das Primärfluid beziehungsweise das Sekundärfluid hauptsächlich in diesem ersten Drittel des Wärmeübertragers 50, während der gesamte hintere Bereich mit weiteren zwei Dritteln der Platten und Kanäle nur mit einem Leckstrom durchstörmt wird, und kaum Energie überträgt. Dafür ist im vorderen Drittel die Strömungsgeschwindigkeit und damit die Effizienz der Wärmeübertragung verbessert.

Der hintere Teil des Wärmeübertrages 50 wird für eine gesteigerte Regelgüte auf der Primärseite und für die Gewährleistung der Hygiene auf der Sekundärseite im Schwachlastfall nur gering durchströmt.

### Bezugszeichenliste

- 1: Trinkwasserstation

- 10: Primärkreislauf
- 11: Pufferspeicher
- 12: Leitung
- 13: Leitung
- 13a: Leitung
- 13b: Leitung
- 13c: Leitung
- 14a: Fördereinrichtung
- 14b: Fördereinrichtung
- 14c: Fördereinrichtung

- 20: Sekundärkreislauf
- 22: Kaltwasserzuleitung
- 23: Leitung mit warmem Trinkwasser
- 27: Temperaturfühler in Kaltwasserzulauf

- 40: Zirkulationskreislauf
- 44: Fördereinrichtung in Zirkulationskreislauf
- 47: Temperaturfühler in Zirkulationskreislauf

- 50: Wärmeübertrager
- 51: Eintritt für das Primärfluid im Wärmeübertrager
- 52: Austritt für das Primärfluid aus dem Wärmeübertrager
- 53: Eintritt für das Sekundärfluid im Wärmeübertrager
- 54: Austritt für das Sekundärfluid aus dem Wärmeübertrager
- 57: Temperaturfühler im Wärmeübertrager

- 60: Element
- 61: Ring
- 62: Führungsstreben
- 63: Rückschlagklappe
- 64: Drehachse

## Patentansprüche

1. Anordnung zur Bereitstellung von warmem Trinkwasser
- mit einem Primärkreislauf (10) mit einem Fluid, einer warmes oder heißes Fluid bereitstellenden Einrichtung (11), die einen Pufferspeicher mit temperaturabhängig geschichteten Bereichen des Primärfluids aufweist, und einer Fördereinrichtung (14) für das Fluid,
- mit einem Sekundärkreislauf (20) für das zu erwärmende Trinkwasser,
- mit einem Wärmeübertrager (50) zur Übertragung von Wärme vom Fluid des Primärkreislaufs (10) auf das Trinkwasser im Sekundärkreislauf (20),
- mit einer Leitung (13) im Primärkreislauf (10), die Fluid vom Wärmeübertrager (50) zur Einrichtung (11) zurückführt,
- mit einer Regelungseinrichtung (30) für die Fördereinrichtung (14),
- mit mindestens einem Temperaturfühler (57) im Primärkreislauf (10) oder Sekundärkreislauf (20), dessen Messwerte der Regelungseinrichtung (30) zugeführt werden,
**dadurch gekennzeichnet,**
**dass** die Leitung (13) des Primärkreislaufs (10) in dem Bereich zwischen dem Wärmeübertrager (50) und der Einrichtung (11) mehrere parallele Stränge (13a, 13b, 13c) aufweist,
**dass** in jedem der parallelen Stränge (13a, 13b, 13c) je mindestens eine Fördereinrichtung (14a, 14b, 14c) angeordnet ist,
**dass** die mehreren parallelen Stränge (13a, 13b, 13c) der Leitung (13) das Fluid jeweils in Bereiche des Pufferspeichers der Einrichtung (11) einschichten, die eine unterschiedliche Temperatur aufweisen, und
**dass** die Ansteuerung der Fördereinrichtungen (14a, 14b, 14c) in den parallelen Strängen (13a, 13b, 13c) durch die Regelungseinrichtung (30) abhängig von der ermittelten Temperatur des Fluids in der Leitung (13) für jede Fördereinrichtung (14a, 14b, 14c) unterschiedlich möglich ist.

2. Anordnung zur Bereitstellung von warmem Trinkwasser nach Anspruch 1,
**dadurch gekennzeichnet,**
**dass** die Leitung (13) des Primärkreislaufs (10) in dem Bereich zwischen dem Wärmeübertrager (50) und der Einrichtung (11) zwei oder drei parallel zueinander verlaufende Teilstränge aufweist.

3. Anordnung zur Bereitstellung von warmem Trinkwasser nach Anspruch 1 oder 2,
**dadurch gekennzeichnet,**
**dass** jede der Fördereinrichtungen (14a, 14b, 14c,) so eingerichtet ist, dass die verschiedenen Fördereinrichtungen jeweils unterschiedliche maximale Volumenströme fördern können.

4. Anordnung zur Bereitstellung von warmem Trinkwasser nach einem der vorstehenden Ansprüche,
**dadurch gekennzeichnet,**
**dass** die das warme oder heiße Fluid bereitstellende Einrichtung (11) mit einer Heizungseinrichtung derart verbindbar ist, dass das Primärfluid zugleich das Heizungswasser dieser Heizung ist.

5. Anordnung zur Bereitstellung von warmem Trinkwasser nach einem der vorstehenden Ansprüche,
**dadurch gekennzeichnet,**
**dass** der Temperaturfühler (57) oder zumindest einer der Temperaturfühler in dem Wärmeübertrager (50) angeordnet ist.

6. Anordnung zur Bereitstellung von warmem Trinkwasser nach einem der vorstehenden Ansprüche,
**dadurch gekennzeichnet,**
**dass** der Wärmeübertrager (50), Teilbereiche des Primärkreislaufes (10) einschließend die Fördereinrichtungen (14a, 14b, 14c) in den Teilsträngen (13a, 13b, 13c), der Temperaturfühler (57), und Teilbereiche des Sekundärkreislaufes (20) in einer Wärmestation (1) zusammengefasst und als Baueinheit aufgebaut sind.

7. Anordnung zur Bereitstellung von warmem Trinkwasser nach einem der vorstehenden Ansprüche,
**dadurch gekennzeichnet,**
**dass** für den Sekundärkreislauf (20) ein Zirkulationskreislauf (40) vorgesehen ist, der eine Fördereinrichtung (44) aufweist,
**dass** die Fördereinrichtung (44) zur Förderung eines variablen Volumenstroms ausgerüstet ist, und
**dass** der Zirkulationskreislauf (40) so ausgelegt ist, dass er ständig bereits erwärmtes Trinkwasser an einem Warmwasserausgang (23) des Sekundärkreislaufs bereitstellt.

8. Anordnung zur Bereitstellung von warmem Trinkwasser nach Anspruch 7,
**dadurch gekennzeichnet,**
**dass** die Fördereinrichtung (44) mit der Regeleinrichtung (30) oder einer anderen Regeleinrichtung verbunden ist, und
**dass** die Regeleinrichtung (30) eine Förderung des Volumenstroms im Zirkulationskreislauf (40) aktiv zur Erzielung einer hohen Regelgüte am Warmwasserausgang (23) und/oder zur Vermeidung einer Stagnation im Sekundärkreislauf (20) zur Verkalkungsprävention beeinflusst.

9. Anordnung zur Bereitstellung von warmem Trinkwasser nach einem der vorstehenden Ansprüche
**dadurch gekennzeichnet,**
**dass** die oder zumindest eine der Fördereinrichtungen (14a, 14b, 14c) Pumpen sind.

10. Anordnung zur Bereitstellung von warmem Trinkwasser nach einem der vorstehenden Ansprüche,
**dadurch gekennzeichnet,**
**dass** der Wärmeübertrager (50) so aufgebaut ist, dass auch eine lastabhängige Durchströmung des Wärmeübertragers (50) ermöglicht ist.

11. Anordnung zur Bereitstellung von warmem Trinkwasser nach Anspruch 10,
**dadurch gekennzeichnet,**
**dass** mittels einer Strömungsabschlusseinrichtung im Inneren des Wärmetauschers (50) eine Durchströmung nur eines Teilbereiches des Wärmetauschers (50) mit den Fluiden des Primärkreislaufes (10) und Sekundärkreislaufes (20) ermöglicht ist.

12. Anordnung zur Bereitstellung von warmem Trinkwasser nach Anspruch 11,
**dadurch gekennzeichnet,**
**dass** Elemente (60) in die Eintritte (51, 53) und Austritte (52, 54) für die Primärfluide und Sekundärfluide im Wärmeübertrager (50) vorgesehen sind, die mit verstellbaren Rückschlagklappen (639 ausgerüstet sind, die den Strömungsweg der Fluide entsprechend lenken können.

13. Verfahren zur Bereitstellung von warmem Trinkwasser in Anlagen
- mit einem Primärkreislauf (10) mit einem Fluid, einer warmes oder heißes Fluid bereitstellenden Einrichtung (11), die einem Pufferspeicher mit temperaturabhängig geschichteten Bereichen des Primärfluides aufweist, und einer Fördereinrichtung (14) für das Fluid,
- mit einem Sekundärkreislauf (20) für das zu erwärmende Trinkwasser,
- mit einem Wärmeübertrager (50) zur Übertragung von Wärme vom Fluid des Primärkreislaufs (10) auf das Trinkwasser im Sekundärkreislauf (20),
- mit einer Leitung (13) im Primärkreislauf (10), die Fluid vom Wärmeübertrager (50) zur Einrichtung (11) zurückführt,
- mit einer Regelungseinrichtung (30) für die Fördereinrichtung (14),
- mit mindestens einem Temperaturfühler (57) im Primärkreislauf (10) oder Sekundärkreislauf (20), dessen Messwerte der Regelungseinrichtung (30) zugeführt werden,
**dadurch gekennzeichnet,**
**dass** Fluid des Primärkreislaufs (10) in dem Bereich zwischen dem Wärmeübertrager (50) und der Einrichtung (11) in mehreren parallelen Strängen (13a, 13b, 13c) geführt wird,
**dass** jeder dieser parallelen Stränge (13a, 13b, 13c) eine separate Förderung des Fluides vornimmt,
**dass** die Fluide aus den parallelen Strängen in Bereiche des Pufferspeichers der Einrichtung (11) mit unterschiedlicher Temperatur eingeschichtet werden, und
**dass** die Ansteuerung der Fördereinrichtungen (14a, 14b, 14c) in den parallelen Strängen (13a, 13b, 13c) durch die Regelungseinrichtung (30) abhängig von der ermittelten Temperatur des Fluids in der Leitung (13) für jede Fördereinrichtung (14a, 14b, 14c) unterschiedlich angesteuert werden.

14. Verfahren zur Bereitstellung von warmem Trinkwasser nach Anspruch 13,
**dadurch gekennzeichnet,**
**dass** die hydraulisch benachteiligten Bereiche des Wärmeübertragers (50) mit einer geringen Leckrate ständig durchströmt werden.
